# EUROPÄISCHE PATENTSCHRIFT

(11) **EP 2 300 241 B1**
(45) Veröffentlichungstag und Bekanntmachung des Hinweises auf die Patenterteilung: **02.12.2015**
(21) Anmeldenummer: 09761394.7
(22) Anmeldetag: 28.05.2009
(51) Int. Cl.: B44F 1/10, G02B 5/28, B42D 25/328, B42D 25/351, B42D 25/373, B42D 25/36

(54) **SICHERHEITSELEMENT MIT OPTISCH VARIABLEM ELEMENT**
SECURITY ELEMENT COMPRISING AN OPTICALLY VARIABLE ELEMENT
ELEMENT DE SECURITE A ELEMENT A VARIATION OPTIQUE

(30) Priorität: 12.06.2008 DE 102008028187
(43) Veröffentlichungstag der Anmeldung: 30.03.2011
(73) Patentinhaber: Giesecke & Devrient GmbH, 81677 München (DE)
(72) Erfinder: HEIM, Manfred, 83646 Bad Tölz (DE)
(86) Internationale Anmeldenummer: PCT/EP2009/003791
(87) Internationale Veröffentlichungsnummer: WO 2009/149831

(56) Entgegenhaltungen:
- WO-A1-01/03945
- WO-A1-03/095228
- DE-A1- 10 226 114
- DE-A1-102004 039 355
- FR-A1- 2 830 791
- GB-A- 2 250 474
- GB-A- 2 282 563
- US-A- 4 434 010

## Beschreibung

Die Erfindung betrifft ein Sicherheitselement aus mindestens einem Dünnschichtelement in Form eines interferenzfähigen, mehrschichtigen Aufbaus. Der interferenzfähige, mehrschichtige Aufbau besteht aus mindestens einer reflektierenden, Schicht, mindestens einer teildurchlässigen Schicht und mindestens einer zwischen diesen Schichten angeordneten dielektrischen Schicht

Zum Schutz gegen Nachahmung, insbesondere mit Farbkopierern oder anderen Reproduktionsverfahren, werden Datenträger, wie beispielsweise Banknoten oder Karten, mit Sicherheitselementen aus mindestens einem interferenzfähigen, mehrschichtigen Aufbau ausgestattet. Der Fälschungsschutz beruht dabei darauf, dass der visuell und einfach und deutlich erkennbare optisch variable Effekt des interferenzfähigen, mehrschichtigen Aufbaus von den oben genannten Reproduktionsgeräten nicht oder nur ungenügend wiedergegeben wird.

Sicherheitselemente aus einem interferenzfähigen, mehrschichtigen Aufbau sind beispielsweise Dünnschichtelemente, die aus einer reflektierenden Schicht, einer dielektrischen Schicht und einer teildurchlässigen Schicht bzw. Absorberschicht bestehen. Wird das Sicherheitselement von der Seite der teildurchlässigen Schicht aus betrachtet, nimmt der Betrachter eine bestimmte Farbe wahr, die sich mit Änderung des Betrachtungswinkels ändert.

Ursache der Farbverschiebung ist ein Interferenzeffekt zwischen den Lichtstrahlen, die von der Oberfläche der äußeren teildurchlässigen Schicht reflektiert werden, und den Lichtstrahlen, die durch die äußere teildurchlässige und die mittlere dielektrische Schicht hindurchtreten und von der inneren reflektierenden Schicht zu der teildurchlässigen Schicht zurück reflektiert werden. An der teildurchlässigen Schicht werden die Lichtstrahlen daraufhin entweder nach außen transmittiert oder wieder reflektiert, so dass in diesem Fall die Lichtstrahlen mehrfach zwischen der reflektierenden Schicht und der teildurchlässigen Schicht hin- und herreflektiert werden. Somit haben die Lichtstrahlen, die durch die Dünnfilmschicht hindurchgetreten sind, einen längeren Weg zurückgelegt als die auf der Oberfläche der Dünnfilmschicht reflektierten Lichtstrahlen, so dass sie gegenüber diesen phasenverschoben sind, wenn sie mit ihnen interferieren.

Treffen die auf die Dünnfilmschicht einfallenden Lichtstrahlen mit unterschiedlichen Einfallswinkeln auf die Dünnfilmschicht auf, ist der in der Dünnfilmschicht zurückgelegte Weg der Lichtstrahlen unterschiedlich lang. Dieser Unterschied resultiert aus der durch den Einfallswinkel geänderten Wegdifferenz der ein- oder mehrfach innerhalb der Dünnfilmschicht reflektierten Strahlen. Deshalb ist die Phasenlage der interferierenden Lichtstrahlen je nach Einfallswinkel unterschiedlich, so dass sich je nach Einfallswinkel unterschiedliche Farben oder Farbtöne des resultierenden, vom Beobachter wahrgenommenen Lichtstrahls ergeben.

Derartige Dünnschichtelemente können in Form von Folien verwendet werden. Beispielsweise ist aus WO 2005/108110 ein Sicherheitselement mit einem Dünnfilmsehiclttelement bekannt, bei dem die einzelnen Schichten vollflächig auf dem Sicherheitselement angeordnet sind. In die Schichtenfolge werden durch Einwirkung von Laserstrahlung Kennzeichnungen in Form von Mustern, Buchstaben, Zahlen oder Bildern eingebracht. Hierfür enthält die Schichtenfolge eine Markierungsschicht aus einem Farbgemisch, das eine die Laserstrahlung absorbierende sowie eine für die Laserstrahlung transparente Germischkomponente aufweist. Die Kennzeichnungen sind aufgrund einer durch die Einwirkung der Laserstrahlung bewirkten irreversiblen Änderung der optischen Eigenschaften des Farbgemisches visuell und/oder maschinell erkennbar.

Aus DE 10 2006 062 281 ist ein Sicherheitsmerkmal bekannt, bei dem eine optisch variable Farbe mit Pigmenten verwendet wird, die mindestens einen interferenzfähigen, mehrschichtigen Aufbau aufweisen. Die Farbe wird mit einer so geringen Flächendeckung gedruckt, dass sie in Durchlicht noch erhebliche Anteile des sichtbaren Lichts durchlässt. Die Pigmente der optisch variablen Farbe werden in einem Teilbereich mittels einer elektromagnetischen Strahlung, beispielsweise einem Laser, irreversibel so verändert, dass in diesem Teilbereich der Interferenzeffekt visuell und/oder maschinell deutlich erkennbar verändert ist. Bevorzugt bestehen die Pigmente aus einem Dünnschichtaufbau aus reflektierender Schicht, dielektrischer Schicht und teildurchlässiger Schicht, wobei der Laser lediglich die teildurchlässige Schicht verändert. Es entsteht ein Auflicht-Durchlicht-Effekt, da in Auflicht die Reflektorschicht der gelaserten Teilbereiche als silberfarbene Markierung sichtbar ist, wohingegen außerhalb der gelaserten Teilbereiche der Farbkippeffekt sichtbar ist. Im Durchsticht erscheint dagegen das Sicherheitselement gleichmäßig grau, da in den gelaserten Teilbereichen die reflektierende Schicht durch den Laser nicht verletzt ist und alle Pigmente nach wie vor opak sind.

Das in DE 10 2006 062 281 beschriebene Sicherheitsmerkmal ist höchst attraktiv und fälschungssicher zugleich. Nachteilig ist lediglich, dass optisch variable Farben mit Pigmenten kostenintensiv in der Herstellung und Beschaffung sind. Darüber hinaus ist bei der Herstellung des Sicherheitselements eine Laserdemetallisierung notwendig, die sehr hohen Ansprüchen insbesondere bezüglich ihrer Fokussierung genügen muss, da bei der Laserdernetallisierung ausschließlich die teildurchlässige Schicht verändert werden darf, ohne benachbarte Schichten zu verändern. Darüber hinaus ist es nicht möglich, mittels Strukturierungen der reflektierenden Schicht im Durchlicht sichtbare Information zu erzeugen.

Aus WO 03/095228 A1 ist ein optisch variables Element bekannt, insbesondere ein optisch variables Sicherheitselement, bei dem das optisch variable Element eine Dünnfilmschicht zur Erzeugung von Farbwechsel mittels Interferenz und eine weitere Schicht aufweist. Die Dünnfilmschicht ist hierbei als partielles Dürmfilmelement ausgebildet, das den Flächenbereich der weiteren Schicht nur bereichsweise und musterförmig bedeckt. Das partielle Dünnfilmelement kann bereichsweise und musterförmig geformt sein, wobei die schematisch dargestellten Elementanordnungen alle zueinander im Register ausgeführt werden können und ohne Einschränkung der Allgemeinheit, sowohl graphische Bildelemente, alphanumerische und geometrische Zeichen, Strichcodes und Zufallsmuster und deren Kombinationen umfassen können.

Der Erfindung liegt deshalb die Aufgabe zugrunde, ein gattungsgemäßes Sicherheitselement derart weiterzubilden, dass die Nachteile des Standes der Technik behoben und der Schutz gegenüber Fälschungen weiter erhöht wird.

Diese Aufgabe wird durch die Merkmale der unabhängigen Ansprüche gelöst. Weiterbildungen der Erfindung sind Gegenstand der abhängigen Ansprüche.

Erfindungsgemäß weisen sowohl die reflektierende Schicht als auch die teildurchlässige Schicht Aussparungen auf: die mindestens eine reflektierende Schicht, eine Vielzahl von Aussparungen in einem ersten Bereich des Sicherheitselements und die mindestens eine teildurchlässige Schicht mindestens eine Aussparung in einem zweiten Bereich. Die Aussparung in der teildurchlässigen Schicht ist als alphanumerisches Zeichen, Grafik oder Muster ausgeformt.

Alternativ weist die mindestens eine teildurchlässige Schicht eine Vielzahl von Aussparungen auf, die in ihrer Gesamtheit ein alphanumerisches Zeichen, eine Grafik oder ein Muster ergeben. Hierbei weist die teildurchlässige Schicht nicht eine vollständige, sondern eine Vielzahl von rasterartig angeordneten Aussparungen auf. Dies hat den Vorteil, dass das im Auflicht sichtbare Muster zwar etwas weniger offensichtlich ist, dafür aber bei Betrachtung in Durchlicht zuverlässiger verschwindet.

Ebenso kann auch die Vielzahl der Aussparungen in der reflektierenden Schicht in ihrer Gesamtheit die Form mindestens eines alphanumerischen Zeichens, einer Grafik oder eines Musters ergeben. Durch kontinuierliche und ortsabhängige Variation der Aussparungsdichte oder Aussparungsgröße können dabei im Durchlicht komplexere Strukturen bis hin zu Halbtonbildern erzeugt werden.

Bevorzugt kann innerhalb der Aussparungen der reflektierenden Schicht auch eine dünne, durchgehende Linie in Form mindestens eines alphanumerischen Zeichens, einer Grafik oder eines Musters angeordnet sein. Solche Linien weisen Linienbreiten von mindestens 0,1 mm bis 5 mm auf, vorzugsweise von 0,2 mm bis 0,7 mm, besonders bevorzugt etwa 0,5 mm. Anstelle von Linien können natürlich auch flächenhafte Bereiche ohne Aussparung gestaltet werden, so dass das von ihr gebildete alphanumerische Zeichen, Muster oder die Graphik lediglich in Durchlicht, nicht jedoch in Auflicht erkennbar ist. Durch dieses zusätzliche Sicherheitsmerkmal wird somit in vorteilhafter Weise die Sicherheit gegenüber Fälschungen weiter erhöht.

Erfindungsgemäß ist weiterhin der zweite Bereich zumindest teilweise innerhalb des ersten Bereiches angeordnet und ist die Gesamtfläche des zweiten Bereiches, die zumindest teilweise innerhalb des ersten Bereiches angeordnet ist, kleiner als die Gesamtfläche des ersten Bereiches. Erster und zweiter Bereich überlappen sich somit, wobei im Überlappungsbereich die Gesamtfläche des zweiten Bereiches kleiner ist als die des ersten Bereiches.

Wird das erfindungsgemäße Sicherheitselement von der teildurchlässigen Schicht aus betrachtet, zeigt sich in Aufsicht ein anderes Erscheinungsbild als in Durchsicht. Somit wird durch die Kombination der Aussparungen in der teildurchlässigen Schicht und gleichzeitig in der darunterliegenden reflektierenden Schicht der besondere Effekt einer im Auflicht sichtbaren Markierung erzeugt, die im Durchlicht verschwindet.

Eine Betrachtung in Auflicht ist im Sinne dieser Erfindung eine Beleuchtung des Sicherheitselements von einer Seite und eine Betrachtung des Sicherheitselements von derselben Seite. Eine Betrachtung in Auflicht liegt somit beispielsweise dann vor, wenn die Vorderseite des Sicherheitselements beleuchtet und auch betrachtet wird.

Eine Betrachtung in Durchlicht ist im Sinne dieser Erfindung eine Beleuchtung eines Sicherheitselements von einer Seite und eine Betrachtung des Sicherheitselements von einer anderen Seite, insbesondere der gegenüberliegenden Seite. Eine Betrachtung in Durchlicht liegt somit beispielsweise dann vor, wenn die Rückseite des Sicherheitselements beleuchtet und die Vorderseite des Sicherheitselements betrachtet wird. Das Licht scheint somit durch das Sicherheitselement hindurch.

Erfindungsgemäß sind die Vielzahl von Aussparungen in der reflektierende Schicht und/oder der teildurchlässigen Schicht stochastiseh und/oder rasterartig angeordnet. Ein Raster im Sinne dieser Erfindung ist eine gleichmäßeige oder ungleichmäßig Verteilung von Aussparungen, wobei die Aussparungen voneinander beabstandet sind.

Hierbei sind die einzelnen Aussparungen in beliebigen Formen ausführbar. Wenn hier besondere Formen der Aussparungen gewählt werden, so kann dies sogar ein zusätzliches Sicherheitsmerkmal darstellen, z.B. Aussparungen in Form eines Texts oder einer Mikrografik. Werden die Aussparungen kreisförmig und/oder linienförmig ausgeführt, so ist der bevorzugte Kreisdurchmesser bzw. die bevorzugte Linienbreiten 10 µm bis 100 µm.

Zur Vermeidung von Moiré-Effekten können die beiden Raster als stochastisches Raster angelegt werden. D.h. die Abstände der einzelnen Rasterdesigns variieren. Werden regelmäßige Punkt- oder Linienraster verwendet, so können die Moiré-Effekte effektiv verhindert werden, wenn zwischen den Schenkeln der Rastereinheitszellen der beiden Raster ein Winkel erheblich unterschiedlich von 0° verwendet wird. Bevorzugt sind Winkel mit ungeraden Gradzahlen zwischen 15° und 75°, besonders bevorzugt 23°.

Der Anteil der Gesamtfläche der Vielzahl von Aussparungen in der reflektierende Schicht bezogen auf die gesamte Fläche der reflektierenden Schicht des ersten Bereichs beträgt erfindungsgemäß 10% bis 40% und bevorzugt etwa 20%. Der Anteil der Gesamtfläche der Aussparungen in der teildurchlässigen Schicht bezogen auf die gesamte Fläche des Bereiches der teildurchlässigen Schicht des zweiten Bereichs, in der ein Erscheinungsbild in Aufsicht sichtbar ist, beträgt erfindungsgemäß 10% bis 100% und bevorzugt 10% bis 40%.

In einer weiteren Ausführungsform ist an den Stellen, an denen die teildurchlässige Schicht Aussparungen aufweist auch die dielektrische Schicht ausgespart. Dies hat optisch dieselbe Wirkung wie eine Aussparung nur der teildurchlässigen Schicht, kann aber verfahrenstechnisch bei der Herstellung Vorteile haben.

Zusätzlich kann der interferenzfähige, mehrschichtige Aufbau mit mindestens einer optisch aktiven Mikrostruktur, beispielsweise einem Hologramm, einem Subwellenlängengitter, einer refraktiven Mikrostruktur, einer Mattstruktur oder einem geblazten Gitter, kombiniert sein.

Des Weiteren kann das Sicherheitselement weitere Sicherheitselemente, wie Fluoreszenz oder Sicherheitsdruck, aufweisen, die im Passer zu der mindestens einen Aussparung im interferenzfähigen, mehrschichtigen Aufbau angeordnet sind. Beispielsweise können unterschiedliche Floureszenzmaterialien auf die Vorder- und Rückseite des Sicherheitselements aufgedruckt werden. Dies hat den Vorteil, dass unter UV-Licht auf der Vorder- und der Rückseite der Folie jeweils ein unterschiedliches fluoreszierendes Bild erkennbar ist.

Der erfindungsgemäße interferenzfähige, mehrschichtige Aufbau ist vorzugsweise dreischichtig oder fünfschichtig ausgeführt.

Der dreischichtige Aufbau besteht aus einer reflektierenden Schicht, einer mittleren dielektrischen Schicht und einer teildurchlässigen Schicht, wobei sowohl die reflektierende Schicht als auch die teildurchlässige Schicht Aussparungen aufweisen.

Der fünfschichtige Aufbau besteht aus einer mittleren reflektierenden Schicht, zwei die mittlere reflektierende Schicht auf jeder Seite umgebende dielektrische Schichten und zwei äußere teildurchlässige Schichten. Ein fünfschichtiges Dtinnschichtelement besteht somit aus einer unteren teildurchlässigen Schicht, gefolgt von einer dielektrischen Schicht, einer mittleren reflektierenden Schicht, an die sich auf der gegenüberliegenden Seite wieder eine dielektrische Schicht anschließt, sowie abschließend aus einer oberen teildurchlässigen Schicht. Der fünfschichtige Aufbau besteht somit aus zwei oben beschriebenen dreischichtigen Aufbauten, die eine gemeinsame reflektierende Schicht aufweisen. Dies hat den Vorteil, dass ein Farbkippeffekt von beiden Seiten sichtbar ist. Andererseits kann die obere und untere dielektrische Schicht mit unterschiedlichem Informationsgehalt ausgespart sein, wodurch beispielsweise in Auflicht von der einen Seite die Zahl "50" und von der gegenüberliegenden Seite in Auflicht ein Symbol "€" erscheint. Die jeweilige Information verschwindet in Durchlicht.

Darüber hinaus kann der Farbkippeffekt auf beiden Seiten sogar unterschiedlich gewählt werden, indem die Dicke der dielektrischen Schicht auf beiden Seiten unterschiedlich gewählt wird.

Als Materialien für die jeweiligen Schichten des interferenzfähigen Aufbaus werden insbesondere verwendet:
- für die reflektierende Schicht reflektierende Substanzen, insbesondere Metalle, wie Aluminium, Silber oder Kupfer,
- für die dielektrische Schicht SiO₂ (Silizium-Dioxid), ZrO₂ (ZirkonDioxid), MgF₂ (Magnesium-Difluorid) oder TiO₂ (Titan-Dioxid) oder andere transparente Stoffe, wie sehr dünne und extrem gleichmäßig aufgedruckte transparente Lacke
- für die teildurchlässige Schicht Chrom und/oder Nickel, Eisen, Silber, Gold, oder Legierungen daraus, wie Inconel™ (Ni-Cr-Fe).

Weitere Materialien für die jeweiligen Schichten des interferenzfähigen Aufbaus sowie insbesondere deren jeweilige Schichtdicken sind in den Druckschriften WO 01/03945 A1, US 6,586,098 B1 und US 6,699,313 B2 aufgerührt. Die Offenbarung der genannten Druckschriften wird insoweit in die vorliegende Anmeldung aufgenommen.

Die Erfindung ist jedoch nicht nur auf drei- oder fünfschichtige Dünnschichtelemente beschränkt, sondern auf viele ein- oder mehrschichtige Dünnschichtelemente anwendbar, die einen optisch variablen Effekt erzeugen. Insbesondere sind aus dem Stand der Technik optisch variable Schichten bekannt, die ausgehend von der reflektierenden Schicht in Richtung des Betrachters mehr als zwei Schichten aufweisen. Auch an Dünnschichtelementen, die aus derartigen optisch variablen Schichten hergestellt sind und somit mehr als fünf Schichten aufweisen, ist die Erfindung anwendbar.

Die einzelnen Schichten des Sicherheitselementes können auf ein Substrat aufgedruckt und/oder aufgedampft werden, beispielsweise mittels bekannter Druckverfahren oder mittels Vakuumbedampfung, wie Sputtern, reaktives Sputtern, Phyical Vapor Deposition oder Chemical Vapor Deposition. Hierbei werden Absorbermaterialien, Dielektrika und Reflektormaterialien in jeweils übereinanderliegenden oder überlappenden Schichten auf das Substrat aufgedruckt und/oder aufgedampft.

Die für die reflektierende und teildurchlässige Schicht infrage kommenden Metalle werden in sehr dünnen Schichten mit Schichtdicken von etwa 5 run bis 100 nm benötigt. Bevorzugt werden diese Schichten mittels Vakuumbedampfung aufgebracht, wobei das betreffende Metall im Vakuum mittels einer Heizeinrichtung, beispielsweise einem Widerstand oder einem Elektronenstrahl, aufgeheizt und verdampft wird. Das Metall scheidet sich dann als dünne Schicht auf einer darüber hinwegbewegen Folie ab. Für das Auftragen der dielektrischen Schicht mit Schichtdicken zwischen 100 nm und 1 µm bieten sich ebenfalls die verschiedenen Variante der Vakuumaufdampfverfahren an. Um gleichmäßige Farben zu erzeugen, ist es hierbei notwendig, die Schichtdicke extrem gleichmäßig zu halten, was insbesondere Sputtern oder auch gut geregelte thermische oder Elektronenstrahlaufdampfverfahren leisten. Alternativ kann das transparente Dielektrikum auch in Form einer transparenten Farbe mittels eines Druckverfahrens aufgebrachte werden. Hierbei ist allerdings äußerste Sorgfalt im Beschichtungsprozess notwendig, um die erforderliche Schichtdickengleichmäßigkeit, mit einer Toleranz von beispielsweise ± 2 %, zu gewährleisten.

Für die Strukturierung bzw. Demetallisierung der Schichten werden vorteilhaft die bekannten Verfahren, wie Waschverfahren, Ätzen, Öl-Ablation, Lift-Off oder Laserdemetallisierung, verwendet.

Vorteilhaft wird somit der aus DE 10 2006 062 281 bekannte Effekt durch Aufdampfen und Demetallisierung hergestellt.

Die Sicherheitsfolie kann mit weiteren Sicherheitselementen, wie Fluoreszenz, eventuell mit unterschiedlichem Design auf der Vorder- und Rückseite, kombiniert werden, oder mit einem präzise gepassertem Sicherheitsdruck.

Das erfindungsgemäße Sicherheitselement ist bevorzugt auf einem Datenträger mit einem transluzenten, bevorzugt transparenten Bereich aufgebracht. Der Datenträger ist hierbei insbesondere ein Wertdokument, wie beispielsweise eine Banknote, ein Wertpapier, eine Kredit- oder Ausweiskarte, ein Pass, eine Urkunde und Ähnliches, ein Label, eine Verpackung oder ein anderes Element für die Produktsicherung.

Der transluzente Bereich ist beispielsweise ein Fenster in Form einer durchgehenden Öffnung, das durch eine transluzente, bevorzugt transparente Folie abgedeckt ist. Somit ist das erfindungsgemäße Sicherheitselement von beiden Seiten des Datenträgers aus sichtbar.

Unter "transluzent" ist hierbei zu verstehen, dass die Schicht semitransparent ist, d.h. die Schicht weist eine Lichtdurchlässigkeit von unter 90 % des auftreffenden Lichtes, vorzugsweise zwischen 80 und 20 % auf. Unter Transparenz ist eine Lichtdurchlässigkeit von mindestens 90 % zu verstehen. Wird das Sicherheitselement auf einem transluzenten Substrat mit einer Lichtdurchlässigkeit von weniger als 90 % aufgebracht, beispielsweise einen sehr dünnen Papierbereich, ist die Größe der Aussparungen entsprechend anzupassen, wodurch sich ein geringerer Kontrast sowie eine geringere Intensität des Farbkippeffekts ergibt.

Anhand der nachfolgenden Ausführungsvarianten bzw. Beispiele und den ergänzenden Figuren werden die Vorteile der Erfindung erläutert. Die beschriebenen Einzelmerkmale und nachfolgend beschriebenen Ausführungsbeispiele sind für sich genommen erfinderisch, aber auch in Kombination erfinderisch, sofern ihr Gegenstand dem in den Ansprüchen definierten Gegenstand entspricht. Die Beispiele stellen bevorzugte Ausführungsformen dar, auf die jedoch die Erfindung in keinerlei Weise beschränkt sein soll.

Des Weiteren sind die Darstellungen in den Figuren des besseren Verständnisses wegen stark schematisiert und spiegeln nicht die realen Gegebenheiten wider. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Beispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen die Figuren schematisch:
- Fig. 1: einen dreischichtigen, interferenzfähigen Aufbau aus einer teildurchlässigen Schicht mit einer Aussparung und einer reflektiertenden Schicht mit einer Vielzahl von rasterartig angeordneten Aussparungen,
- Fig. 2: einen dreischichtigen, interferenzfähigen Aufbau aus einer teildurchlässigen Schicht und einer reflektierenden Schicht mit jeweils einer Vielzahl von rasterartig angeordneten Aussparungen,
- Fig. 3: einen fünfschichtigen, interferenzfähigen Aufbau aus zwei teildurchlässigen Schichten und einer mittleren reflektierenden Schicht mit jeweils einer Vielzahl von rasterartig angeordneten Aussparungen,
- Fig. 4: einen dreischichtigen, interferenzfähigen Aufbau gemäß Fig.1, bei dem die dielektrische Schicht analog zur teildurchlässigen Schicht Aussparungen aufweist,
- Fig. 5: einen dreischichtigen, interferenzfähigen Aufbau gemäß Fig. 1 von der Seite der reflektierenden Schicht aus betrachtet, mit einer durchgehenden Linie in Form eines Sterns innerhalb der rasterartig angeordneten Aussparungen der reflektierenden Schicht,
- Fig. 6: einen dreischichtigen, interferenzfähigen Aufbau gemäß Fig. 1 mit umgekehrter Reihenfolge, der auf einem Prägelack mit Prägestruktur und einem Substrat aufgebracht ist.

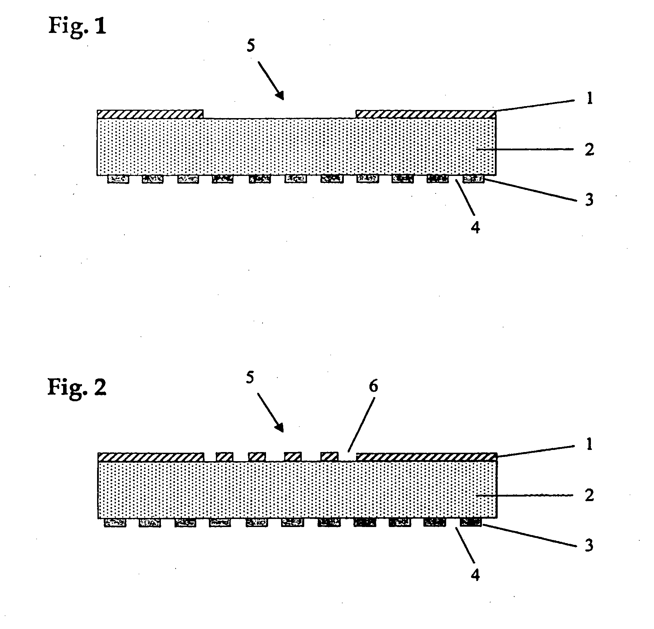

Fig. 1 zeigt einen erfindungsgemäßen Dünnschichtaufbau in Form eines dreischichtigen, interferenzfähigen Aufbau aus einer teildurchlässigen Schicht 1 mit einer Aussparung 5 und einer reflektierenden Schicht 3 mit einer Vielzahl von rasterartig angeordneten Aussparungen 4. Zwischen der teildurchlässigen Schicht 1 und der reflektierenden Schicht 3 ist vollflächig eine dielektrische Schicht 2 angeordnet.

Ein Betrachter, der von der Seite der teildurchlässigen Schicht 1 aus auf das Sicherheitselement blickt, nimmt in Auflicht in den Bereichen außerhalb der Aussparung 5 einen Farbkippeffekt wahr. Hierbei wechselt beispielsweise beim Kippen des Sicherheitselementes die Farbe des Dünnschichtaufbaus von Grün nach Rot. Im Bereich der Aussparung 5 nimmt der Betrachter unter nahezu allen Betrachtungswinkeln die Farbe der reflektierenden Schicht 3 wahr, beispielsweise die Farbe Grau. Ist beispielsweise die Aussparung 5 in Form der Zahl "50" ausgeführt, sieht der Betrachter beim Kippen des Sicherheitselementes aus nahezu allen Betrachtungswinkeln die graue Zahl "50", um die Zahl "50" herum jedoch einen Farbkippeffekt von Grün nach Rot.

Die rasterartig angeordneten Aussparungen 4 sind kreisförmig und/oder linienförmig ausgeführt, wobei die kreisförmigen Aussparungen einen Durchmesser von 10 Mikrometer bis 100 Mikrometer, bevorzugt von 30 Mikrometer bis 50 Mikrometer, und die linienförmigen Aussparungen eine Breite von 30 Mikrometer bis 70 Mikrometer aufweisen.

In Durchlicht hingegen tritt Licht durch die Vielzahl der Aussparungen 4 der reflektierenden Schicht 3 und durch die restlichen Schichten des Dünnfilmaufbaus hindurch, so dass der Betrachter sowohl innerhalb als auch außenhalb der Aussparung 5 keinen Farbkippeffekt, sondern eine einheitlich graue Fläche wahrnimmt.

Blickt der Betrachter von der Seite der reflektierenden Schicht 3 aus auf das Sicherheitselement, nimmt er in Auflicht das von der reflektierenden Schicht 3 reflektierte Licht und in Durchlicht das durch die Aussparungen 4 hindurchtretende Licht wahr. Somit nimmt der Betrachter in Auflicht eine metallisch glänzende Fläche und in Durchlicht eine einheitlich graue Fläche wahr.

Je nach Ausgestaltung der Aussparung 5 in der teildurchlässigen Schicht 1 tritt jedoch auch die Aussparung 5 in Durchlicht von der Vorderseite des Sicherheitselementes aus betrachtet mehr oder weniger in Erscheinung. Um dies zu verhindern wird gemäß Fig. 2 die Aussparung 5 durch eine Vielzahl von Aussparungen 6 ersetzt. Dadurch ist der im Auflicht erkennbare Kontrast zwischen den Bereichen 5 und 1 etwas reduziert, im Gegenzug führt dies jedoch dazu, dass der Bereich 5 im Durchlicht so überstrahlt wird, dass er dem Betrachter nicht mehr ausfällt.

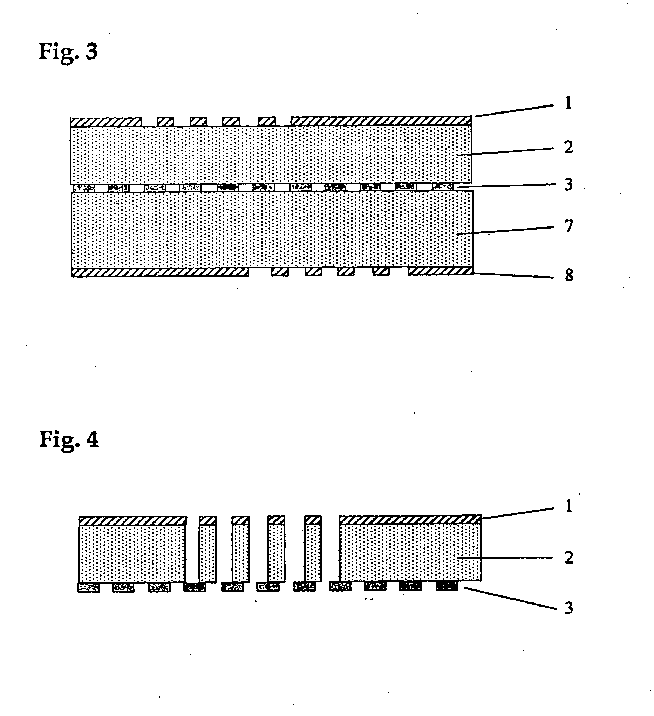

Die beiden Ausführungsformen nach Fig. 1 und Fig. 2 können auch dahingehend modifiziert werden, indem sie gemäß Fig. 3 doppelseitig ausgeführt werden. Hierbei ist zwischen zwei dielektrischen Schichten 2 und 7 eine gemeinsame reflektierende Schicht 3 angeordnet, die rasterförmige Aussparungen aufweist. Auf der Seite der jeweiligen dielektrischen Schicht 2 und 7, die der reflektierenden Schicht 3 gegentiberliegt, ist jeweils eine teildurchlässige Schicht 1 und 8 angeordnet. Beide teildurchlässige Schichten 1 und 8 weisen Aussparungen gemäß dem Ausführungsbeispiel aus Fig. 2 auf.

Besonders vorteilhaft ist hierbei, dass ein Farbkippeffekt von beiden Seiten sichtbar ist. Andererseits können die teildurchlässige Schicht 1 auf der dielektrischen Schicht 2 und die teildurchlässige Schicht 8 auf der dielektrischen Schicht 7 mit unterschiedlichen Informationen ausgespart sein. Es erscheint in Auflicht von der einen Seite beispielsweise die Zahl "50" und von der gegenüberliegenden Seite in Auflicht das Symbol "€", wohingegen die jeweilige Information in Durchlicht verschwindet.

Ohne die optische Wirkung des Effekts einzuschränken, kann gemäß Fig. 4 an den Stellen, an denen die teildurchlässige Schicht 1 Aussparungen aufweist, auch die dielektrische Schicht 2 ausgespart sein. Exemplarisch ist dies in Fig. 4 am Ausführungsbeispiel gemäß Fig. 2 gezeigt.

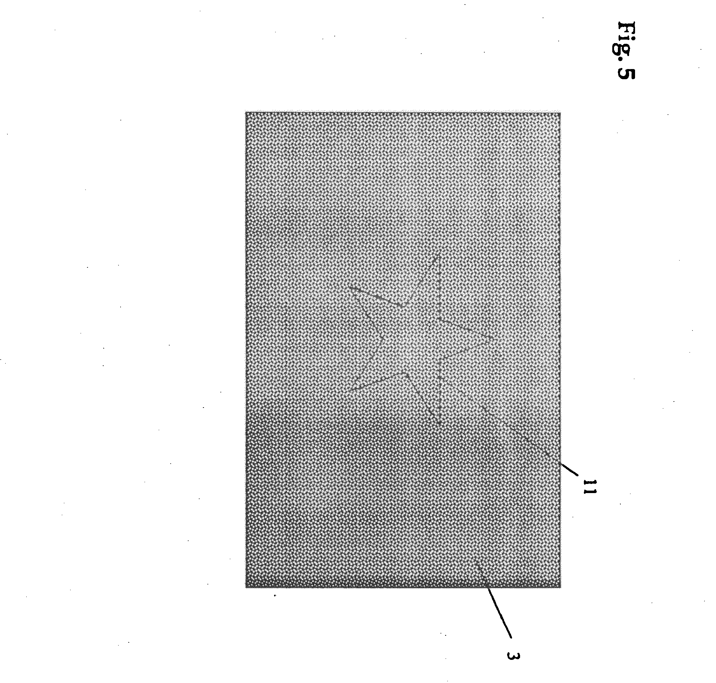

Fig. 5 zeigt einen dreischichtigen, interferenzfähigen Aufbau gemäß Fig. 1 in Durchlicht von der Seite der reflektierenden Schicht 3 aus betrachtet. Innerhalb der rasterartig angeordneten Aussparungen 4 der reflektierenden Schicht befindet sich eine dünne, durchgehende Linie 11 in Form eines Sterns. Diese Linie hat effektiverweise eine Breite von 0,1 mm bis 5 mm, so dass die Linie im Durchlicht genügend auffällt. Im Auflicht ist sie nahezu unabhängig von ihrer Linienstärke für eisen Betrachter nicht zu erkennen, da sich der im Auflicht erkennbare Farbkippeffekt zwischen den Bereichen mit vollflächiger reflektierenden Schicht und ausgesparter reflektierender Schicht praktisch nicht unterscheidet. In Durchlicht sieht der Betrachter damit den Stern zusätzlich zu den zu Fig. 1 beschriebenen Effekten und in Auflicht nur die zu Fig.1 beschriebenen Effekte ohne den Stern.

Besonders vorteilhaft ist das erfindungsgemäße Sicherheitselement mit bekannten optisch aktiven Mikrostrukturen kombiniert, wie beispielsweise diffraktive Prägehologramme, Zero Order Gratings, refraktive Mikrostrukturen, wie Blazed Gratings und dergleichen.

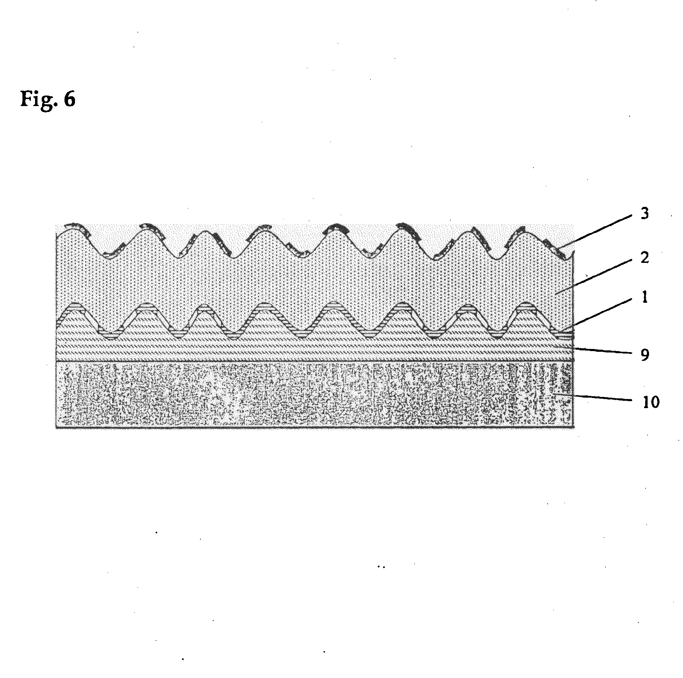

Beispielhaft zeigt Fig. 6 eine derartige Kombination mit einem Prägehologramm, wobei der folgende interferenzfähige, dreischichtige Aufbau gewählt wurde: eine reflektierende Schicht 3 mit rasterartig angeordneten Aussparungen auf einer dielektrischen Schicht 2 und einer teildurchlässigen Schicht 1, die in zwei Bereichen rasterartig angeordneten Aussparungen aufweist. Dieser Aufbau ist auf einem Prägelack 9 mit einem diffraktiven Prägestruktur und einem Substrat 10 aufgebracht.

Dieses Sicherheitsmerkmal zeigt von der Vorderseite einen ersten Farbkippeffekt, z.B. von Magenta nach Grün, und von der Rückseite einen zweiten Farbkippeffekt, z.B. von Grün nach Magenta. Darüber hinaus sieht man im Auflicht von der Rückseite sowie von der Vorderseite innerhalb der Farbschicht unterschiedliche Bildinformationen, z.B. ein "€"-Zeichen und ein "$"-Zeichen. Im Durchlicht verschwinden dann die Farbeindrücke nahezu vollständig und es kommt lediglich ein Hell/Dunkel-Bild zum Vorschein, z.B. ein Graustufenportrait. Von beiden Seiten sieht man darüber hinaus ein Design, welches von der Prägestruktur bestimmt wird. Vorteilhaft können bei diffraktiven Prägestrukturen bekannte Hologramm-Designelemente verwendet werden. Die Hologramminformation ist von der Vorder- und Rückseite in gleicher Weise, aber gespiegelt zueinander sichtbar. Im Durchlicht verschwindet die Hologramminformation.

Das Ausführungsbeispiel gemäß Fig. 6 kann selbstverständlich auch mit der umgekehrten Schichtreihenfolge auf der Prägeschicht aufgebaut werden, d.h. in der Reihenfolge Prägelack, reflektierende Schicht, dielektrische Schicht und teildurchlässige Schicht auf dem Prägelack 9 mit einem diffraktiven Prägestruktur und dem Substrat 10. Ebenso ist auch eine Ausführungsform entsprechend Fig. 3 möglich, d.h. es kann jeweils ein optisch variables Dünnschichtelement auf beiden Seiten des Prägelacks 9 aufgebaut werden.

## Patentansprüche

1. Sicherheitselement aus mindestens einem interferenzfähigen, mehrschichtigen Aufbau, der aus mindestens einer reflektierenden Schicht (3), mindestens einer teildurchlässigen Schicht (1) und mindestens einer zwischen der reflektierenden Schicht (3) und der teildurchlässigen Schicht (1) angeordneten dielektrischen Schicht (2) besteht, bei dem
- in einem ersten Bereich des Sicherheitselements die mindestens eine reflektierende Schicht (3) eine Vielzahl von Aussparungen (4) aufweist und
- in einem zweiten Bereich des Sicherheitselements die mindestens eine teildurchlässige Schicht (1) mindestens eine Aussparung (5) in Form eines alphanumerischen Zeichens, einer Grafik oder eines Musters aufweist oder eine Vielzahl von Aussparungen (6) aufweist, die in ihrer Gesamtheit ein alphanumerisches Zeichen, eine Grafik oder ein Muster ergeben, und
- der zweite Bereich zumindest teilweise innerhalb des ersten Bereiches angeordnet ist und
- die Gesamtfläche des zweiten Bereiches, die zumindest teilweise innerhalb des ersten Bereiches angeordnet ist, kleiner als die Gesamtfläche des ersten Bereiches ist, und
- das Sicherheitselement, von der teildurchlässigen Schicht (1) aus betrachtet, in Aufsicht ein anderes Erscheinungsbild zeigt als in Durchsicht, und
- die Vielzahl von Aussparungen (4, 6) in der reflektierenden. Schicht (3) und der teildurchlässigen Schicht (1) beliebige Form haben können und stochastisch oder rasterartig angeordnet sind und/ oder in ihrem Durchmesser oder ihrem Abstand zueinander lokal variieren, und
- der Anteil der Gesamtfläche der Aussparungen (6) in der teildurchlässigen Schicht (1) bezogen auf die gesamte Fläche des Bereiches der teildurchlässigen Schicht (1) des zweiten Bereichs, in der ein Erscheinungsbild in Aufsicht sichtbar ist, 10% bis 100% betragt, **dadurch gekennzeichnet, daß**
- der Anteil der Gesamtfläche der Vielzahl von Aussparungen (4) in der reflektierende Schicht (3) bezogen auf die gesamte Fläche der reflektierenden Schicht (3) des ersten Bereichs 10% bis 40% beträgt.

2. Sicherheitselement nach Anspruch 1, **dadurch gekennzeichnet, dass** die einzelnen Aussparungen (4, 6) kreisförmig rund/ oder linienförmig ausgeführt sind.

3. Sicherheitselement nach Anspruch 2, **dadurch gekennzeichnet, dass** die kreisförmigen Aussparungen einen Durchmesser von 10 Mikrometer bis 100 Mikrometer, bevorzugt von 30 Mikrometer bis 50 Mikrometer, und die linienförmigen Aussparungen eine Breite von 30 Mikrometer bis 70 Mikrometer aufweisen.

4. Sicherheitselement nach Anspruch 2 oder 3, **dadurch gekennzeichnet, dass** alle Winkel der Achsen einer Einheitszelle der Aussparungen (4) in der reflektierenden Schicht (3) einem Winkel von erheblich mehr als 0° gegenüber den Winkeln der Achsen einer Einheitszelle in den Aussparungen (6) in der teildurchlässigen Schicht (1) einschließen, bevorzugt Winkel mit ungeraden Gradzahlen zwischen 15° und 75°.

5. Sicherheitselement nach mindestens einem der vorigen Ansprüche, **dadurch gekennzeichnet, dass** der Anteil der Gesamtfläche der Vielzahl von Aussparungen (4) in der reflektierenden Schicht (3) bezogen auf die gesamte Fläche der reflektierenden Schicht (3) etwa 20% beträgt.

6. Sicherheitselement nach mindestens einem der vorigen Ansprüche, **dadurch gekennzeichnet, dass** der Anteil der Gesamtfläche der Aussparungen (6) in der teildurchlässigen Schicht (1) bezogen auf die gesamte Fläche des Bereiches der teildurchlässigen Schicht (1), in der ein Erscheinungsbild in Aufsicht sichtbar ist, 10% bis 40% beträgt.

7. Sicherheitselement nach mindestens einem der vorigen Ansprüche, **dadurch gekennzeichnet, dass** die Vielzahl der Aussparungen (4) in der reflektierenden Schicht (3) in ihrer Gesamtheit die Form mindestens eines alphanumerischen Zeichens, einer Grafik oder eines Musters ergeben.

8. Sicherheitselement nach mindestens einem der vorigen Ansprüche, **dadurch gekennzeichnet, dass** der interferenzfähige, mehrschichtige Aufbau dreischichtig ausgeführt ist und aus einer reflektierenden Schicht (3), einer mittleren dielektrischen Schicht (2) und einer teildurchlässigen Schicht (1) besteht.

9. Sicherheitselement nach mindestens einem der Ansprüche 1 bis 7, **dadurch gekennzeichnet, dass** der interferenzfähige, mehrschichtige Aufbau fünfschichtig ausgeführt ist und aus einer mittleren reflektierenden Schicht (3), zwei die mittlere reflektierende Schicht (3) auf jeder Seite umgebende dielektrische Schichten (2, 7) und zwei äußere teildurchlässige Schichten (1, 8) besteht.

10. Sicherheitselement nach mindestens einem der vorigen Ansprüche, **dadurch gekennzeichnet, dass** an den Stellen, an denen die teildurchlässige Schicht (1, 8) Aussparungen (6) aufweist auch die dielektrische Schicht (2, 7) ausgespart ist.

11. Sicherheitselement nach mindestens einem der vorigen Ansprüche, **dadurch gekennzeichnet, dass** der interferenzfähige, mehrschichtige Aufbau mit mindestens einer optisch aktiven Mikrostruktur, beispielsweise einem Hologramm, einem Subwellenlängengitter, einer refraktiven Mikrostruktur, einer Mattstruktur oder einem geblazten Gitter kombiniert ist.

12. Sicherheitselement nach mindestens einem der vorigen Ansprüche, **dadurch gekennzeichnet, dass** das Sicherheitselement weitere Sicherheitselemente, wie Fluoreszenz oder Sicherheitsdruck, aufweist, die im Passer zu der mindestens einen Aussparung im interferenzfähigen, mehrschichtigen Aufbau angeordnet sind.

## Claims

1. A security element of at least one multi-layer composition, which composition is capable of interference and consists of at least one reflecting layer (3), at least one partially transmitting layer (1) and at least one dielectric layer (2) arranged between the reflecting layer (3) and the partially transmitting layer (1), wherein
- the at least one reflecting layer (3) comprises in a first region of the security element a multitude of gaps (4) and
- the at least one partially transmitting layer (1) comprises in a second region of the security element at least one gap (5) in form of an alphanumeric character, a drawing or a pattern, or a multitude of gaps (6), which result in their entirety in an alphanumeric character, a drawing or a pattern, and
- the second region is arranged at least partially within the first region and
- the total area of the second region, which is at least partially arranged within the first region, is smaller than the total area of the first region and
- the security element, when viewed from the partially transmitting layer (1), displays a different appearance in top view than in transmission view and
- the multitude of gaps (4, 6) in the reflecting layer (3) and the partially transmitting layer (1) may have arbitrary shape and are arranged stochastic or grid like and/or vary locally in their diameter or their distance to each other and
- the portion of the total area of the gaps (6) in the partially transmitting layer (1) is 10% to 100% with respect to the total area of the region of the partially transmitting layer (1) of the second region, in which an appearance is visible in top view,
**characterized in that**
- the portion of the total area of the multitude of gaps (4) in the reflecting layer (3) is 10% to 40% with respect to the total area of the reflecting layer (3) of the first region.

2. The security element according to claim 1, **characterized in that** the single gaps (4, 6) are configured circular and/or line shaped.

3. The security element according to claim 2, **characterized in that** the circular gaps have a diameter of 10 microns to 100 microns, preferably of 30 microns to 50 microns, and the line shaped gaps have a width of 30 microns to 70 microns.

4. The security element according to claim 2 or 3, **characterized in that** all angles of the axes of a unit cell of the gaps (4) in the reflecting layer (3) include an angle of significantly more than 0° with respect to the angles of the axes of a unit cell in the gaps (6) in the partially transmitting layer (1), preferably angles having odd degree numbers between 15° and 75°.

5. The security element according to at least one of the preceding claims, **characterized in that** the portion of the total area of the multitude of gaps (4) in the reflecting layer (3) is about 20% with respect to the total area of the reflecting layer (3).

6. The security element according to at least one of the preceding claims, **characterized in that** the portion of the total area of the gaps (6) in the partially transmitting layer (1) is 10% to 40% with respect to the total area of the region of the partially transmitting layer (1), in which an appearance is visible in top view.

7. The security element according to at least one of the preceding claims, **characterized in that** the multitude of the gaps (4) in the reflecting layer (3) result in their entirety in the shape of at least one alphanumeric character, a drawing or a pattern.

8. The security element according to at least one of the preceding claims, **characterized in that** the multi-layer composition, capable of interference, is configured in three layers and consists of a reflecting layer (3), a middle dielectric layer (2) and a partially transmitting layer (1).

9. The security element according to at least one of claims 1 to 7, **characterized in that** the multi-layer composition, capable of interference, is configured in five layers and consists of a middle reflecting layer (3), two dielectric layers (2, 7) surrounding the middle reflecting layer (3) on each side, and two outer partially transmitting layers (1, 8).

10. The security element according to at least one of the preceding claims, **characterized in that** at the locations, at which the partially transmitting layer (1, 8) has gaps (6), also the dielectric layer (2,7) is left open.

11. The security element according to at least one of the preceding claims, **characterized in that** the multi-layer composition, capable of interference, is combined with at least one optically active micro structure, for example a hologram, a sub wavelength grating, a refractive micro structure, a matte structure or a blazed grating.

12. The security element according to at least one of the preceding claims, **characterized in that** the security element comprises further security elements, such as fluorescence or security print, which are arranged in the register with respect to the at least one gap in the multi-layer composition, capable of interference.

## Revendications

1. Elément de sécurité en au moins une structure multicouches à capacité d'interférence, lequel se compose d'au moins une couche réfléchissante (3), d'au moins une couche partiellement transparente (1) et d'au moins une couche diélectrique (2) disposée entre la couche réfléchissante (3) et la couche partiellement transparente (1), dans lequel
- dans une première zone de l'élément de sécurité, l'au moins une couche réfléchissante (3) présente une pluralité d'évidements (4), et
- dans une seconde zone de l'élément de sécurité, l'au moins une couche partiellement transparente (1) présentant au moins un évidement (5) sous la forme d'un signe alphanumérique, d'un graphique ou d'un motif, ou bien présentant une pluralité d'évidements (6) lesquels forment, dans leur totalité, un signe alphanumérique, un graphique ou un motif, et
- la seconde zone étant disposée au moins partiellement à l'intérieur de la première zone, et
- la surface totale de la seconde zone, laquelle est disposée au moins partiellement à l'intérieur de la première zone, étant plus petite que la surface totale de la première zone, et
- l'élément de sécurité, lorsque vu à partir de la couche partiellement transparente (1), montrant une apparence visuelle en vue en surface différente de celle en vue en transparence, et
- la pluralité des évidements (4, 6) dans la couche réfléchissante (3) et la couche partiellement transparente (1) pouvant avoir une forme quelconque et pouvant être disposés de manière stochastique ou à la manière d'un réseau et/ou variant localement concernant leur diamètre ou leur espacement les uns par rapport aux autres, et
- le pourcentage de la surface totale des évidements (6) dans la couche partiellement transparente (1), compte tenu de la surface totale de la zone de la couche partiellement transparente (1) de la seconde zone dans laquelle une apparence visuelle est visible en vue en surface, étant de 10 % à 100 %,
**caractérisé en ce que**
- le pourcentage de la surface totale de la pluralité des évidements (4) dans la couche réfléchissante (3), compte tenu de la surface totale de la couche réfléchissante (3) de la première zone, étant de 10 % à 40 %.

2. Elément de sécurité selon la revendication 1, **caractérisé en ce que** les évidements (4, 6) individuels sont réalisés avec une forme circulaire et/ ou une forme linéaire.

3. Elément de sécurité selon la revendication 2, **caractérisé en ce que** les évidements en forme circulaire présentent un diamètre de 10 micromètres à 100 micromètres, de préférence de 30 micromètres à 50 micromètres, et **en ce que** les évidements en forme linéaire présentent une largeur de 30 micromètres à 70 micromètres.

4. Elément de sécurité selon la revendication 2 ou 3, **caractérisé en ce que** tous les angles des axes d'une cellule unitaire des évidements (4) dans la couche réfléchissante (3) forment un angle nettement supérieur à 0° par rapport aux angles des axes d'une cellule unitaire dans les évidements (6) dans la couche partiellement transparente (1), de préférence des angles à nombres de degrés impairs compris entre 15° et 75°.

5. Elément de sécurité selon l'une au moins des revendications précédentes, **caractérisé en ce que** le pourcentage de la surface totale de la pluralité des évidements (4) dans la couche réfléchissante (3), compte tenu de la surface totale de la couche réfléchissante (3), est de près de 20 %.

6. Elément de sécurité selon l'une au moins des revendications précédentes, **caractérisé en ce que** le pourcentage de la surface totale des évidements (6) dans la couche partiellement transparente (1), compte tenu de la surface totale de la zone de la couche partiellement transparente (1) dans laquelle une apparence visuelle en vue en surface est visible, est de 10 % à 40 %.

7. Elément de sécurité selon l'une au moins des revendications précédentes, **caractérisé en ce que** la pluralité des évidements (4) dans la couche réfléchissante (3) produisent, dans leur totalité, la forme d'au moins un signe alphanumérique, d'un graphique ou d'un motif.

8. Elément de sécurité selon l'une au moins des revendications précédentes, **caractérisé en ce que** la structure multicouches à capacité d'interférence est réalisée à trois couches et se compose d'une couche réfléchissante (3), d'une couche du milieu diélectrique (2) et d'une couche partiellement transparente (1).

9. Elément de sécurité selon l'une au moins des revendications 1 à 7, **caractérisé en ce que** la structure multicouches à capacité d'interférence est réalisée à cinq couches et se compose d'une couche du milieu réfléchissante (3), de deux couches diélectriques (2, 7) entourant de chaque côté la couche du milieu réfléchissante (3) et de deux couches extérieures partiellement transparentes (1, 8).

10. Elément de sécurité selon l'une au moins des revendications précédentes, **caractérisé en ce qu'**aux endroits où la couche partiellement transparente (1, 8) présente des évidements (6), la couche diélectrique (2, 7) est également évidée.

11. Elément de sécurité selon l'une au moins des revendications précédentes, **caractérisé en ce que** la structure multicouches à capacité d'interférence est combinée avec au moins une microstructure active optiquement, par exemple un hologramme, un réseau de sous longueur d'onde, une microstructure réfractive, une structure matte ou un réseau blazé.

12. Elément de sécurité selon l'une au moins des revendications précédentes, **caractérisé en ce que** l'élément de sécurité présente d'autres éléments de sécurité, tels de la fluorescence ou une impression de sécurité, lesquels sont disposés en repérage par rapport à l'au moins un évidement dans la structure multicouches à capacité d'interférence.
